# EUROPEAN PATENT SPECIFICATION

(11) **EP 2 411 450 B1**
(45) Date of publication and mention of the grant of the patent: **26.12.2018**
(21) Application number: 10723369.4
(22) Date of filing: 19.03.2010
(51) Int. Cl.: C08G 77/02, C08J 3/12

(54) **A PARTICLE CONTAINING A HYDROPHOBIC REGION AND A HYDROPHILIC REGION AND METHODS TO MAKE SAME**
TEILCHEN MIT EINEM HYDROPHOBEN BEREICH UND EINEM HYDROPHILEN BEREICH UND HERSTELLUNGSVERFAHREN DAFÜR
PARTICULE CONTENANT UNE ZONE HYDROPHOBE ET UNE ZONE HYDROPHILE ET SES PROCÉDÉS DE FABRICATION

(30) Priority: 23.03.2009 US 162418 P
(43) Date of publication of application: 01.02.2012
(73) Proprietor: Cabot Corporation, Boston MA 02210-2019 (US)
(72) Inventor: DOSHI, Dhaval, A., Lexington MA 02420 (US)
(74) Representative: Grünecker Patent- und Rechtsanwälte PartG mbB
(86) International application number: PCT/US2010/000827
(87) International publication number: WO 2010/110852

(56) References cited:
- EP-A1- 1 903 075
- US-A1- 2005 100 728
- US-A1- 2006 029 802

## Description

### BACKGROUND OF THE INVENTION

The present invention relates to a particle containing a hydrophobic region and a hydrophilic region, products containing the same, processes of making the same, and uses thereof.

Aerogel particles have a very low density, high porosity, and small pore diameters. Aerogels, in particular those with porosities of greater than about 60 vol% and densities of less than about 0.4 g/cm³ (g/cc), exhibit very low thermal conductivity. Therefore, aerogels are used as thermal insulating materials as is described, for example, in EP-A-0 171 722.

However, aerogels can have several disadvantages. Aerogels can be almost completely hydrophobic. The depth of organics removal from aerogels can be difficult or not well controlled. Also, hydrophobic aerogels are poorly wetted by water and do not mix well with aqueous solutions. These problems limit their use in various applications.

Accordingly, there is a need for particles that avoid one or more of the above-described disadvantages.

### SUMMARY OF THE PRESENT INVENTION

A feature of the present invention is to provide a particle containing a hydrophobic region and a hydrophilic region, and to provide processes to make such a particle,, in particular, to provide a method of making a particle from an aerogel particle (or other particle) wherein the depth of organics removal is controlled, and therefore controlling the regions of hydrophobicity and hydrophilicity, wherein the aerogel particle (or other particle) can be wetted by water and mixed well with aqueous solutions while maintaining substantial porosity and inherent aerogel properties, and which aerogel particle expands its use in various applications, and to provide methods to make such an aerogel.

Additional features and advantages of the present invention will be set forth, in part, in the description that follows, and, in part, will be apparent from the description, or may be learned by practice of the present invention. The objectives and other advantages of the present invention will be realized and attained by means of the elements and combinations particularly pointed out in the description and appended claims.

To achieve these and other advantages, and in accordance with the purposes of the present invention, as embodied and broadly described herein, the present invention relates to a particle comprising an inner region and an outer region, wherein at least a portion of said outer region is hydrophilic and said inner region is hydrophobic, wherein the particle is an aerogel, carbon black, a metal oxide or silica, and
wherein said at least a portion of said outer region that is hydrophilic is selected from at least one of a photocalcined region, a region inverse fluidized in ozonated water or in a water chamber with UV light, or an alkaline solution-treated region, and
wherein said inner region is hydrophobic from contacting a starting particle with a silylating compound selected from silanes, halosilanes, haloalkylsilanes, alkoxysilanes, alkoxyalkylsilanes, alkoxyhalosilanes, cyclic siloxanes, disiloxanes, or disilazanes.
The process of making the particle of the present invention can include the photocalcination of a starting particle to achieve the desired level of hydrophilicity and hydrophobicity.

The process of making the particle of the present invention can comprise
- subjecting a particle selected from an aerogel, carbon black, a metal oxide and silica having hydrophobic organic groups on a surface of said particle to photocalcination to remove at least a portion of said hydrophobic organic groups on said surface;
- subjecting a particle selected from an aerogel, carbon black, a metal oxide and silica having hydrophobic organic groups on a surface of said particle to inverse fluidization in (1) ozonated water or (2) in a water chamber with UV light;
- subjecting a particle selected from an aerogel, carbon black, a metal oxide and silica having a hydrophobic surface with an alkaline solution and then fracturing the treated particle to form a particle with exposed hydrophobic regions and hydrophilic regions; or
- subjecting a particle selected from an aerogel, carbon black, a metal oxide and silica having a hydrophobic surface to a first process to convert at least a portion of said outer region to a hydrophilic region;
treating said particle having said hydrophilic region with at least one silane treating agent;
subjecting said particle to a second process to convert a further portion of said outer region to a hydrophilic region;
treating said additional hydrophilic region with at least one silane treating agent that is the same or different from said earlier treating with said silane treating agent.

Photocalcination can be achieved by using UV/Ozone techniques to control the depth of organics removal from a porous hydrophobic particle such as an aerogel. A UV/Ozone photocalciner can be used to subject a hydrophobic particle, such as an aerogel, to a photocalcination process where ozone and free oxygen radicals are generated from the action of UV light on oxygen molecules in the air. UV light of 184 nm can be used in the process. The extent and depth of photocalcination and therefore, the extent and depth of organics removal can be controlled by (a) the time of treatment, (b) the power of the UV lamp, and/or (c) the initial oxygen concentration in the air. The method according to the present invention, therefore, can be used to control the regions of hydrophobicity and hydrophilicity. The method can also include the step of intermittent mixing and re-settling of the particles in a bed to expose all sides of the particles. Further, the method can include the steps of (a) treating the photocalcined regions of the particles, which is preferably at least a portion of an outer region of the particles, with silane treating agents to create particles having functional groups, or (b) producing silanol groups that are reactive and cross-linkable on the surface of the particles. Another method to create a core/shell (e.g., hydrophobic core, hydrophilic shell) particles is by inverse fluidization of the particles, like aerogel particles in (1) ozonated water or (2) in a water chamber with UV light. This method can be useful since the treated particles will have a shell of water causing them to aggregate in water, and become heavier. This will reduce their buoyancy and then the particles can be easily separated out from the bottom of the fluidized bed. This provides for a continuous, semi-continuous method of preparing the particles on a large scale. A further method to create the particles of the present invention can include a chemical method, wherein the starting particle is treated with alkaline water or other alkaline solutions, for instance, having a pH of 10-14. By treating the starting particle with the alkaline solution, this forms a hydrophobic core with a hydrophilic surface, wherein the particle can then optionally be broken or otherwise fractured to expose the hydrophobic regions and thereby create particles having hydrophobic regions and hydrophilic regions in the same particle.

The present invention, in addition, relates to products containing the particles of the present invention or uses of the particles of the present invention. These products or uses can be, but are not limited to, a monolith, a building block, an optical waveguide, a blanket, a matting agent, a structural composite panel, a glass-fiber reinforced panel, a window, a separation wall, a composite wall, a temperature insulation panel, a sound insulation panel, a moisture resistant article, a syntactic foam, or any product of manufacture containing the particles of the present invention. One other use can be as an insulation material (not restricted to a panel).

The present invention includes, but is not limited to, the following embodiments as numbered below:
1. A particle comprising an inner region and an outer region, wherein at least a portion of the outer region is hydrophilic and the inner region is hydrophobic, wherein the particle is an aerogel, carbon black, a metal oxide or silica, and
   wherein said at least a portion of said outer region that is hydrophilic is selected from at least one of a photocalcined region, a region inverse fluidized in ozonated water or in a water chamber with UV light, or an alkaline solution-treated region, and
   wherein said inner region is hydrophobic from contacting a starting particle with a silylating compound selected from silanes, halosilanes, haloalkylsilanes, alkoxysilanes, alkoxyalkylsilanes, alkoxyhalosilanes, cyclic siloxanes, disiloxanes, or disilazanes.
2. The particle of embodiment 1, wherein the outer region is entirely hydrophilic.
3. The particle of embodiments 1-2, wherein the particle has a total volume, and the outer region is from 0.001 % to 95% of the total volume.
4. The particle of embodiments 1-2, wherein the particle has a total volume, and said outer region is from 5% to 50% of the total volume.
5. The particle of embodiments 1-2, wherein the particle has a total volume, and said outer region is from 10% to 25% of the total volume.
6. The particle of embodiments 1 and 3-5, wherein the outer region has a portion that is hydrophilic and a portion that is hydrophobic.
7. The particle of embodiment 6, wherein from 5% to 80% (by volume) of the outer region is hydrophilic.
8. The particle of embodiment 6, wherein from 20% to 60% (by volume) of the outer region is hydrophilic.
9. The particle of embodiment 6, wherein about ½ of the outer region exposed to the surface is hydrophilic and the other ½ of the outer region is hydrophobic.
10. The particle of embodiments 1-9, wherein the outer region has less hydrophobic organic groups than the inner region.
11. The particle of embodiments 1-10, wherein the outer region has from 25% to 100% (by weight) less hydrophobic organic groups than inner region.
12. The particle of embodiments 1-11, wherein at least a portion of the outer region has silanol groups on its surface.
13. The particle of embodiments 1-12, wherein the particle is wettable in aqueous solutions.
14. The particle of embodiment 12, wherein the silanol groups are reactive or cross-linkable.
15. The particle of embodiments 1-14, further comprising one or more silane treating agents on the outer region that is hydrophilic.
16. A monolith comprising a plurality of particles according to embodiments 1-15.
17. The particle of embodiments 1-16, wherein the particle is fumed silica.
18. A method to make the particle of embodiments 1-17, by treating a starting particle (e.g., aerogel) with an alkaline solution, like alkaline water (for instance, having a pH of 10-14), and then breaking or otherwise fracturing the particle in order to create a particle having hydrophilic regions and hydrophobic regions.

It is to be understood that both the foregoing general description and the following detailed description are exemplary and explanatory only, and are intended to provide a further explanation of the present invention, as claimed.

### DETAILED DESCRIPTION OF THE PRESENT INVENTION

The present invention relates to a particle containing a hydrophobic region and a hydrophilic region as defined in the claims that is derived from a hydrophobic particle such as an aerogel and which optionally can overcome many of the above-described disadvantages. The present invention is capable of controlling the depth of organics removal in a particle, and therefore, the particle can have regions of hydrophobicity and hydrophilicity, and is easily wetted by water or other aqueous solutions while optionally maintaining substantial porosity and/or inherent particle (e.g., aerogel) properties. The particle according to the present invention can be utilized in a number of applications such as a monolith, a coating, a building block, an optical waveguide, a blanket, a matting agent, a structural composite panel, a glass-fiber reinforced panel, a window, a separation wall, a composite wall, a temperature insulation panel, a sound insulation panel, a moisture resistant article, a syntactic foam, or any product of manufacture capable of containing the particles of the present invention. The particle to be treated is an aerogel, carbon black, a metal oxide, or silica (e.g., fumed silica). The starting particle to be treated can have a hydrophobic surface treatment that makes it initially hydrophobic or can be inherently hydrophobic.

In addition, the present invention relates to methods to form a particle having an inner region and an outer region, wherein at least a portion of the outer region is hydrophilic and the inner region hydrophobic. More particularly, the present invention relates to methods of converting a hydrophobic particle, such as an aerogel, so as to change the outer portion or surface to a hydrophilic surface or at least to have portions of hydrophilic surfaces in the exterior part of the particle.

The methods of the present invention can be achieved by subjecting a particle having hydrophobic organic groups on a surface of the particle to photocalcination to remove at least a portion of the hydrophobic organic groups on the surface. This, in turn, creates hydrophilic regions on the surface. The photocalcination can occur using any suitable technique. Examples are provided below, but other techniques can be used.

In one process of making the particle of the present invention, UV/Ozone techniques can be used to remove hydrophobic organic groups and to optionally control the depth of organics removal from a hydrophobic particle, such as an aerogel. A UV/Ozone photocalciner can be used to subject a hydrophobic particle, such as an aerogel, to a photocalcination process where ozone and free oxygen radicals are generated from the action of UV light on oxygen molecules in the air. More preferably, UV light of 184 nm is used in the process. The extent and depth of photocalcination and therefore, the extent and depth of organics removal can be controlled by (a) the time of treatment, (b) the power of the UV lamp, and (c) the initial oxygen concentration in the air. The method can also include the step of intermittent mixing and re-settling of the particles in a bed to expose all sides of the particles. Further, the method can include the steps of (a) treating the photocalcined regions of the particles, which is preferably at least a portion of an outer region of the particles, with silane treating agents to create functional particles, or (b) producing silanol groups that are reactive and cross-linkable on the surface of at least a portion of an outer region of the particles.

In the present invention, the time of treatment can be from 1 second to 120 minutes. The power of the UV lamp can be controlled and can be, for example, from 10 W to 1000 W. Power exposure can vary from 10 mW/cm² to 100 W/cm² or higher. The exposure time for the treatment can be related to the power of the lamp; the higher the lamp power, the lower the exposure time. The initial oxygen concentration in the air can be any amount, such as from 1% to 99% by weight (e.g., from 5% to 75% or from 10% to 60%, or from 15% to 50%, or from 20% to 40% by weight). Instead of air, any gas containing oxygen can be used including pure oxygen gas.

For purposes of the present invention, outer regions and inner regions of a particle, such as aerogel, are described. The outer region can be any depth and typically includes the surface of the particle. The inner region can be a core and can be any volume, but will typically be surrounded or encapsulated by the outer region. The outer region can be any percent of the volume of the particle, such as from 0.001% to 99%, wherein the remaining percent would be the inner region. From a distance and depth point of view, examples of the outer region can be from about 0.001 µm (micron) to 99% of the particle size (e.g., from 0.01 µm (micron) to 90%, from 0.1 µm (micron) to 85%, from 1 µm (micron) to 80%, from 0.1 µm (micron) to 70%, from 0.5 µm (micron) to 70%, from 0.5 µm (micron) to 50%, from 0.3 µm (micron) to 40%, from 0.25 µm (micron) to 30%, from 0.25 µm (micron) to 25%, from 0.3 µm (micron) to 10% of the particle size). The table below provides non-limiting examples of outer region thicknesses and the % volume of the outer region for a particle.

| ***Effective Radius of the particle (µm (micron))*** | ***Thickness of the outer region, t (µm (micron))*** | ***% Volume of outer shell*** |
|---|---|---|
| 1000 | 0.01 | 0.003 |
| 1000 | 0.1 | 0.030 |
| 1000 | 1 | 0.300 |
| 1000 | 2 | 0.599 |
| 1000 | 5 | 1.493 |
| 1000 | 10 | 2.970 |
| 1000 | 50 | 14.263 |
| 1000 | 100 | 27.100 |
| 1000 | 500 | 87.500 |

UV/Ozone techniques that can be used in the method according to the present invention are described by Doshi et al., Langmuir, 2005; Dattelbaum et al., MRS Sym. Proc., 2003; or Clark et al., Chem. Mater., 2000. A UV/Ozone photocalciner that can be used in the method according to the present invention is available commercially. Examples include Model 42 Jelight Company Inc, CA; and equipment from Technology and Science Inc, CA. The removal of hydrophobic organic groups from the particle during the photocalcination process can be limited to the outside region of the particle due to the tortuous path that the ozone molecules have to traverse in the aerogel matrix and the limited depth of penetration of the short UV radiation. The process can also be used to create a Janus particle that has a hydrophobic side and a hydrophilic side opposite to the hydrophobic side. Further treatments include treating the particle with silane as indicated.

Another method to create a core/shell (e.g., hydrophobic core, hydrophilic shell) particles is by inverse fluidization of the particles, such as aerogel particles in (1) ozonated water and/or (2) in a water chamber with UV light. This method can be useful since the treated particles will have a shell of water causing them to aggregate in water, and become heavier. This will reduce their buoyancy and then the particles can be easily separated out from the bottom of the fluidized bed. This provides for a continuous or semi-continuous method of preparing the particles on a large scale. The inverse fluidization can be achieved in an inverse fluid bed such as the system described in WO 2008/060940.

Another method to make the particles of the present invention involves treating the starting particle (e.g., aerogel) with an alkaline solution, such as alkaline water. The alkaline solution preferably has a pH of 10 or higher, such as from 10 to 14. Various organic and inorganic alkalis can be used to make such a solution. The starting particles can be treated with the alkaline solution in any manner, such as spraying the alkaline solution onto the particles, dipping the particles in the alkaline solution, using atomizing techniques to apply the alkaline solution onto the starting particles, spray coating techniques, which involve applying the alkaline solution onto the starting particles, and mixing the alkaline solution and the particles by means of stirring, shaking, or other known methods of mixing liquids and solids. The amount of the alkaline solution can be any amount sufficient to create at least one hydrophilic region on the surface of the particle and, preferably, enough alkaline solution is used to coat over 50%, such as from 50% to 100%, of the surfaces of the particles being treated with the alkaline solution. After treating the particles with the alkaline solution, they can be washed (e.g., with water) to remove excess alkaline. After treating the particles with the alkaline solution or after washing, the particles can be dried by air or other drying techniques, such as oven drying, fluid bed drying, rotary drying, spray drying. Alternatively, the particles can be dried in two steps, first a decantation or a centrifugation or a filtration step followed by a drying step. Then prior to drying or after drying or during drying, the particles are fractured or otherwise broken into one or more parts. By doing so, the particles have at least one hydrophobic region and at least one hydrophilic region. The fracturing of the particles that have been treated with the alkaline solution can be achieved using any technique, such as an Attritor mill, ball mill, high-energy mill, hammer mill, jet mill, or low and high shear mixers.

In the present invention, the terms "aerogel particles" and "aerogels" are used interchangeably. Any aerogel particles can be treated by the present invention. Other particles that can be treated by the present invention are carbon black, silica (e.g., fumed silica), and metal oxides. Aerogel particles for use in the present invention can be those that are based on metal oxides that are suitable for a sol-gel technique (C. J. Brinker, G. W. Scherer, Sol-Gel Science. 1990, Chaps. 2 and 3), such as Si or Al compounds, or those based on organic substances that are suitable for the sol-gel technique, such as melamine-formaldehyde condensates (U.S. Pat. No. 5,086,085) or resorcinol-formaldehyde condensates (U.S. Pat. No. 4,873,218). They can also be based on mixtures of the above-mentioned materials. Aerogels containing silicon (Si) compounds and, more preferably, SiO₂ are used. To reduce the radiative contribution to thermal conductivity, the aerogel can contain IR opacifiers, such as carbon black, titanium dioxide, iron oxide, or zirconium dioxide, or mixtures thereof.

The aerogels (or other particles) can have various particle size distributions. The aerogels (or other particles) can be in the form of comminuted powders or larger chunks. The aerogels can be in the shape of spheres, although the aerogel chunks can have any shape. The particle diameter of the aerogel particles can be less than 10 mm and, more preferably, less than 5 mm. A suitable range is 3 mm to 0.008 mm, or 3 mm to 0.8 mm.

Essentially, any commercially available hydrophobic aerogel (or other hydrophobic particle) can be used in the present invention. Examples include, but are not limited to, aerogels commercially available from Cabot Corporation. Particular commercially available types include, but are not limited to, Nanogel® aerogels. An advantage of the present invention, and in particular the preferred process used with the present invention, is that the aerogel (or other particle) can be pre-formed and therefore any desirable structure, morphology, or other characteristic can be chosen.

The starting particle may be subjected to a surface treatment to modify the surface chemistry of the starting particle for subsequent treatment with methods of the present invention to form hydrophilic and hydrophobic regions. The treatment agent may be an oligomer or polymer or may be a non-polymeric material. The treatment agent may be a hydrophobizing agent. Particles, such as aerogel, fumed silica or other fumed metal oxides may be modified by contacting it with one or more of 3-methacryloxypropyltrimethoxysilane, octamethylcyclotetrasiloxane, silicone fluid, dimethyldichlorosilane, hexamethyldisilazane, and/or octyltrimethylsiloxane under appropriate reaction conditions. Other silanes that can be used include, but are not limited to, those silanes listed in U.S. Patent No. 5,707,770. Exemplary silanes include, but are not limited to, compounds of the formula R₃SiX, cyclic siloxanes of the general formula (R₂SiO)_{y}, and linear siloxanes of the general formula R'₃Si--O--{Si(R)₂--O}_{z}-SiR'₃, wherein each R' is independently selected from aliphatic hydrocarbon or fluorocarbon radicals of 6 carbon atoms or less (e.g., methyl, trifluoromethyl, ethyl, pentafluoroethyl, propyl, butyl, isopropyl, tert-butyl, amyl), phenyl radicals (e.g., phenyl, tolyl, fluorophenyl, chlorophenyl, nitrophenyl, hydroxyphenyl), or hydroxyl radicals, each R is independently selected from aliphatic hydrocarbon radicals of 6 carbon atoms or less or phenyl radicals, each X is independently selected from halogen radicals (e.g., chloro, bromo, iodo), or hydroxyl radicals and salts thereof (e.g., OH, O--Li, O--Na, O--K), y is 3 or 4, and z is an integer from 0 to 10, inclusive. Exemplary specific silanes include, but are not limited to, trimethylchlorosilane (TMCS), hexamethyldisiloxane (HMDS), octamethyltrisiloxane, decamethyltetrasiloxane, hexamethylcyclotrisiloxane, hydroxy terminated polydimethylsiloxane, or octamethylcyclotetrasiloxane. Methods of modifying the surface of metal oxides include the methods described in U.S. Patents Nos. 6,090,439; 6,159,540; 6,334,240; 5,928,723; 5,989,768; and 5,429,873, and U.S. Patent Publications Nos. 20030194550 and 20060269465. In exemplary embodiments, the particle and treating agent are charged into a reactor and maintained at an appropriate temperature until a desired extent of reaction is achieved.

Aerogels are low density porous solids that have a large intraparticle pore volume. Generally, they are produced by removing pore liquid from a wet gel. However, the drying process can be complicated by capillary forces in the gel pores, which can give rise to gel shrinkage or densification. In one manufacturing approach, collapse of the three dimensional structure is essentially eliminated by using supercritical drying. A wet gel also can be dried using an ambient pressure, also referred to as non-supercritical drying process. When applied, for instance, to a silica-based wet gel, surface modification, e.g., end-capping, carried out prior to drying, prevents permanent shrinkage in the dried product. The gel can still shrink during drying but springs back recovering its former porosity.

Product referred to as "xerogel" can also be obtained from wet gels from which the liquid has been removed. The term often designates a dry gel compressed by capillary forces during drying, characterized by permanent changes and collapse of the solid network.

For convenience, the term "aerogel" is used herein in a general sense, referring to both "aerogels" and "xerogels".

Aerogels typically have low bulk densities (0.15 g/cm³ or less, preferably 0.03 to 0.3 g/ cm³), very high surface areas (generally from 300 to 1,000 square meter per gram (m²/g) and higher, preferably from 600 to 1000 m²/g), high porosity (90% and greater, preferably greater than 95%), and a relatively large pore volume (3 milliliter per gram (mL/g), preferably 3.5 mL/g and higher). Aerogels can have a nanoporous structure with pores smaller than 1 micron (µm). Often, aerogels have a mean pore diameter of about 20 nanometers (nm). The combination of these properties in an amorphous structure gives the lowest thermal conductivity values (e.g., 9 to 16 (mW)/m·K at a mean temperature of 37° C and 0.1 MPa (1 atmosphere) of pressure) for any coherent solid material.

Aerogels can be nearly transparent or translucent, scattering blue light, or can be opaque.

A common type of aerogel is silica-based. Aerogels based on oxides of metals other than silicon, e.g., aluminum, zirconium, titanium, hafnium, vanadium, yttrium and others, or mixtures thereof can be utilized as well.

Also known are organic aerogels, e.g., resorcinol or melamine combined with formaldehyde, dendredic polymers, and so forth, and the invention also could be practiced using these materials.

Suitable aerogel materials and processes for their preparation are described, for example, in U.S. Patent Application No. 2001/0034375 A1 to Schwertfeger et al., published on October 25, 2001.

The aerogel material employed preferably is hydrophobic. As used herein, the terms "hydrophobic" and "hydrophobized" refer to partially as well as to completely hydrophobized aerogel. The hydrophobicity of a partially hydrophobized aerogel can be further increased. In completely hydrophobized aerogels, a maximum degree of coverage is reached and essentially all chemically attainable groups are modified.

Hydrophobicity can be determined by methods known in the art, such as, for example, contact angle measurements or by methanol (MeOH) wettability. A discussion of hydrophobicity in relation to aerogels is found, for example, in U.S. Patent No. 6,709,600 B2.

Hydrophobic aerogels can be produced by using hydrophobizing agents, e.g., silylating agents, halogen- and in particular fluorine-containing compounds such as fluorine-containing alkoxysilanes or alkoxysiloxanes, e.g., trifluoropropyltrimethoxysilane (TFPTMOS), and other hydrophobizing compounds known in the art. Hydrophobizing agents can be used during the formation of aerogels and/or in subsequent processing steps, e.g., surface treatment.

Silylating compounds such as, for instance, silanes, halosilanes, haloalkylsilanes, alkoxysilanes, alkoxyalkylsilanes, alkoxyhalosilanes, disiloxanes, and disilazanes are preferred. Examples of suitable silylating agents include, but are not limited to diethyldichlorosilane, allylmethyldichlorosilane, ethylphenyldichlorosilane, phenylethyldiethoxysilane, trimethylalkoxysilanes, e.g., trimethylbutoxysilane, 3,3,3-trifluoropropylmethyldichlorosilane, symdiphenyltetramethyldisiloxane, trivinyltrimethylcyclotrisiloxane, hexaethyldisiloxane, pentylmethyldichlorosilane, divinyldipropoxysilane, vinyldimethylchlorosilane, vinylmethyldichlorosilane, vinyldimethylmethoxysilane, trimethylchlorosilane, hexamethyldisiloxane, hexenylmethyldichlorosilane, hexenyldimethylchlorosilane, dimethylchlorosilane, dimethyldichorosilane, mercaptopropylmethyldimethoxysilane, bis{3-(triethoxysilyl)propyl}tetrasulfide, hexamethyldisilazane and combinations thereof.

Silylating agents and other known chemistries that can react, or attach, or strongly interact with the silanols or hydoxyls, can be used to post treat the hydrophilic regions of the particle. This can result in a dual treated particle. Such a dual treated particle can be further subjected to the photocalcination method to create multi treated particles.

Aerogel materials can include one or more additives such as fibers, opacifiers, color pigments, dyes and mixtures thereof. For instance, a silica aerogel can be prepared to contain additives such fibers and/or one or more metals or compounds thereof. Specific examples include aluminum, tin, titanium, zirconium or other non-siliceous metals, and oxides thereof. Non-limiting examples of opacifiers include carbon black, titanium dioxide, zirconium silicate, and mixtures thereof. Additives can be provided in any suitable amounts, e.g., depending on desired properties and/or specific application.

The particles, such as the aerogel materials, can be produced in granular, pellet, bead, powder, or other particulate form. The particle can have any particle size, such as any particle size suitable for an intended application. For instance, the particles can be within the range of from 0.01 µm (microns) to 10.0 millimeters (mm). The particles can have a mean particle size in the range of 0.3 to 3.0 mm. Other particle sizes and/or mean particle sizes can be used.

Examples of commercially available aerogel materials in particulate form are those supplied under the tradename of Nanogel® by Cabot Corporation, Billerica, Massachusetts. Nanogel® aerogel granules have high surface area, are greater than 90% porous and are available in a particle size ranging, for instance, from 8 microns (µm) to 10 mm. Specific grades of translucent Nanogel® aerogel include, for instance, those designated as TLD302, TLD301 or TLD100; specific grades of IR-opacified Nanogel® aerogel include, e.g., those under the designation of IG303 or CBTLD103; specific grades of opaque Nanogel® aerogel include, for instance, those designated as OGD303. aerogels can also be reinforced with fibers.

The starting aerogel particles used in the present invention can have hydrophobic surface groups. The hydrophobic groups can be covalently bonded on at least the inside surface of the aerogel. Examples of such groups are mono-, di-, or tri-substituted silyl groups of the formulas: 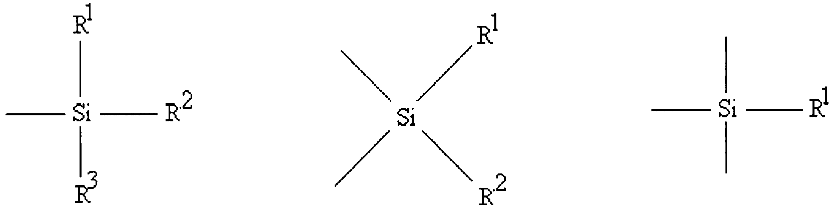 where R¹ is hydrogen or a non-reactive linear, branched, cyclic, aromatic, or heteroaromatic organic radical, preferably, a linear, branched, or cyclic C₁ - C₁₈ -alkyl radical or a C₆ - C₁₄ -aryl radical. R² and R³, which can be the same or different, can be hydrogen or a non-reactive linear, branched, cyclic, aromatic, or heteroaromatic organic radical, preferably, a linear, branched, or cyclic C₁ - C₁₈ -alkyl radical, a C₆ - C₁₄ -aryl radical, an OH or OR' group, wherein R' is a linear or branched C₁ - C₆ -alkyl radical; preferably trialkyl and/or triarylsilyl groups. R¹, R², and R³, which can be the same or different, can be C₁ - C₆ -alkyl, cyclohexyl, or phenyl. The aerogels can be alternatively or in addition PDMS treated.

Trimethyl- and dimethylsilyl groups for hydrophobization of the aerogel can be introduced as described in WO 94/25149 or by gas-phase reaction between the aerogel and, for example, an activated trialkylsilane derivative, such as a chlorotrialkylsilane or a hexaalkyldisilazane (cf. R. Iler, The Chemistry of Silica, Wiley & Sons, 1979).

Aerogels with porosities of greater than 60% by volume and densities of less than 0.4 g/cm³ (g/cc) can be used. The aerogels of the present invention can have densities of from 0.05 to 0.15 g/cm³ (g/cc). The thermal conductivity of the aerogel particles can be less than 40 mW/m°K, preferably, less than 25 mW/m°K, and, more preferably, the thermal conductivity of the aerogel particles is from 12 to 18 mW/m°K, or lower.

In one or more embodiments of the present invention, the present invention relates to a particle having an inner region and an outer region, wherein at least a portion of the outer region is hydrophilic and the inner region is hydrophobic, as defined in claim 1. As indicated, an example of such a particle is an aerogel. As an option, the entire outer region can be hydrophilic or portions of the outer region can be hydrophilic. For instance, the particle can have a total volume wherein the outer region is from 1% to 95%, or from 5% to 50%, or from 10% to 25% of the total volume. A portion of the outer region can be hydrophilic and another portion can be hydrophobic. For example, from 5% to 80%, or from 20% to 60% of the outer region can be hydrophilic.

As another example, with the present invention, it is possible to have half of the outer region that is exposed to the surface to be hydrophilic and the other half of the outer region exposed to the surface can be hydrophobic. The outer region of the particle can have less hydrophobic organic groups than the inner region. For instance, the outer region can have from 25% to 100% (by weight) less hydrophobic organic groups than the inner region. Also, as an option, at least a portion of the outer region, if not all of the outer region, can have silanol groups on its surface. The silanol groups can be reactive or cross-linkable. Also, as an option, the particles of the present invention can have one or more silane-treating agents on the outer region that is hydrophilic. Examples of such silane-treating agents include, but are not limited to, hexamethyl disilazane, trifluoropropyl trimethoxy silane, and hexamethyldisiloxane. Preferably, as surface modifying agents, the following silanes can be employed, either individually or in a mixture: dimethyldichlorosilane, octyltrimethoxysilane, oxtyltriethoxysilane, hexamethyldisilazane, 3-methacryloxypropyltrimethoxysilane, 3-methacryloxypropyltriethoxysilane, hexadecyltrimethoxysilane, hexadecyltriethoxysilane, dimethylpolysiloxane, glycidyloxypropyltrimethoxysilane, glycidyloxypropyltriethoxysilane, nanofluorohexyltrimethoxysilane, tridecafluorooctyltrimethoxysilane, tridecafluorooctyltriethoxysilane, aminopropyltriethoxysilane. Especially preferably, octyltrimethoxysilane and octyltriethoxysilane can be employed.

Also, as an option, the particles of the present invention can be wettable in aqueous solutions due to the outer region being hydrophilic or at least having portions of the outer region that are hydrophilic.

The aerogel used to make the particle according to the invention keeps desirable properties attributed to the aerogel such as low density, low thermal conductivity, low electrical conductivity, low dielectric constant and/or shock absorption, and/or light transmission, and obtains additional properties, such as wettability in aqueous fluids.

The core-shell nature of the particles is evidenced by mixing the treated particles with water. Due to the hydrophilic shell the water wets the particles and a layer/shell of water is seen around the particles. Furthermore, these many neighboring particles can be held together by capillary forces indicating the wetting by the aqueous fluid. However, these particles still float on water and are substantially filled with air. Also, since the photocalcination is affected by the presence of both UV light and ozone, the treatment has a line of sight dependence. Hence, a region not directly exposed to the UV light, will be subjected to minimal photocalcination. This will give rise to particles with hydrophobic and hydrophilic regions on the surface (akin to a Janus particle).

In the present invention, the particle (e.g., aerogel) can have one or more hydrophilic regions present on and/or within the particle. The hydrophilic region(s) can be, as an option, a reactive site, for instance, for post treatment(s) (e.g., chemical post treatment to attach chemical groups, chemical post treatment to further alter the hydrophilic region, surface post treatment using one or more processes to change the surface further chemically and/or the particle morphology). In the present invention, more than one process or step can be used to form hydrophilic regions on the same particle. For instance, the particle can have two or more hydrophilic regions where the hydrophilic regions were formed by different methods. Or, the particle can have one or more hydrophilic regions where at least one of the hydrophilic regions is formed and/or subjected to more than one method to form the hydrophilic region (e.g., dual hydrophilic treatment to create the hydrophilic region(s)). The use of one or more of the processes described herein to form a hydrophilic region can be repeated one or more times on the same particle, for instance, to enhance and/or further create functionality on the particle. The same process can be repeated and/or a different process can be used to form a hydrophilic region on the same particle. Any number of processes to form the hydrophilic regions can be used. For instance, a particle can be treated to form a hydrophilic region(s), and then post treated, such as to attach a silane treating agent(s) on the hydrophilic region, and the same particle can then be subjected to further processes (same or different from first hydrophilic forming step) to form additional hydrophilic region(s), that can optionally have further attached silane treating agent(s) that can be the same or different from the initial silane treating agent(s). The hydrophilic regions, if more than one, can have different hydrophilicities, for instance, due to the different hydrophilic forming methods used in forming each region. Thus, as an option, the present invention relates to a method of making the particle of the present invention which can include subjecting a particle having a hydrophobic surface to a first process to convert at least a portion of said outer region to a hydrophilic region; and then treating the particle having the hydrophilic region with at least one silane treating agent; and then subjecting the particle to a second process to convert a further portion (and/or the same previous portion) of the outer region to a hydrophilic region, and then treating the additional hydrophilic region with at least one silane treating agent that is the same or different from the earlier treating with the silane treating agent(s). The placement or attaching of the silane treating agents onto the particle at the hydrophilic region (or portion thereof) can render that surface hydrophobic again. Then, using the present invention, the same region, a different region, or both can be made hydrophilic and the same or different chemical (e.g. silane treating agent) can be used to treat the particle. For example, a previously silane treated particle, such as a tri-methyl silyated silica aerogel, can be converted again to have hydrophilic sites which then can be post treated with octyl dimethyl silanes or poly-dimethoxy-siloxane to form new regions that are hydrophobic. This further treated areas can have a different chemical interaction with the matrix (polymer, resins) than the particle that only received the initial silane treating agent. As an option, the particle that receives one or more silane treating agents (and/or other chemical treating agents) can lead to converting the hydrophilic region back to a hydrophobic region. Then as an option, the particle can be subjected to one or more further processes of the present invention to create (and/or restore) hydrophilic region(s) (which can be the same region that was previously hydrophilic and/or a different region(s)). Then, as an option, the further created hydrophilic regions can receive additional silane treating agents (and/or chemical treating agents). This process can be repeated any number of times. The hydrophobic or hydrophilic character of a region can be determined by the nature of the treating agent or lack-of treatment.

With respect to the present invention, the outer region that is made hydrophilic can be one or more regions, such as multiple regions. The region that is made hydrophilic can be a continuous region on the particle or it can be a non-continuous region(s). The outer region that is made hydrophilic can be made uniformly hydrophilic in degree of hydrophilicity or non-uniformly hydrophilic. The outer region that is made hydrophilic can be an area that is at least 100 nm long in at least one dimension. For instance, the region that is made hydrophilic can be a region that is 100 nm x 1 nm, or 100 nm x 10 nm, or 100 nm x 100 nm, or larger. The thickness of the region or depth of the region can be 1 nm or more, such as 1 nm to 1 µm (micron) or more. The region, for instance, can be 1 µm (micron) long in at least one dimension or in two dimensions. As stated, the region that is made hydrophilic can be multiple regions where each of the regions is 100 nm long in at least one dimension. The hydrophilic regions can be randomly distributed or uniformly distributed throughout the outer region. Each of the outer regions that are made hydrophilic can be the same size or can be different sizes or surface areas. Generally, a region that is made hydrophilic can have a water contact angle of less than 90°, for instance, less than 80°, less than 70°, less than 60°, less than 50°, less than 40°, less than 30°, less than 20°, or less than 10°. For instance, the contact angle can be from 5° to 90°, or 10° to 80°, or 15° to 70°. A hydrophobic region can typically have a water contact angle of greater than or equal to 90°, for instance, greater than 100°, greater than 110°, greater than 120°, greater than 130°, greater than 140°, greater than 150° or higher. When a region is made hydrophilic in the present invention, this hydrophilic region is preferably wettable with water or an aqueous solution.

In the present invention, one or more particles can be used for the delivery of a hydrophobic substance(s), which can then be delivered in or to an aqueous medium or formulation. For instance, a hydrophobic substance can be an oil. The particles of the present invention can be used in slow release applications of substances, such as hydrophobic substances.

With the present invention, the particles can be used to form an article that is made from a plurality of particles of the present invention, such as a monolith or monolith-like structure, wherein the monolith uniformly has hydrophilic regions throughout the thickness of the monolith and/or has uniformity with respect to the hydrophilic regions in all dimensions of the monolith structure or other article being formed from the particles.

The particles of the present invention can be used in the same applications as conventional particles, such as hydrophobic particles, and, more particularly, such as aerogels. Examples of uses of the particles of the present invention include, but are not limited to, (1) a filter media where the enhanced wetting properties of the particle allow a large contact area between aerogel and water and whereby the inner hydrophobic region can still act to remove organics from an aqueous media, (2) functional particles by treating the photocalcined regions of the particles with a wide variety of silane treating agents, (3) cross-linking particles because of the reactive silanol groups on the surface of the particles, thereby creating monoliths or monolith-like structures, (4) building blocks for larger aggregates of various shapes, sizes and forms, or (5) optical waveguides. In an optical waveguide that incorporate the particles according to the present invention, water or any aqueous media is used to guide the light. Since the inner region of the particle is hydrophobic, it has a lower refractive index. Since the outer region of the particle is hydrophilic, it has a higher refractive index than the inner region, when the outer region is in contact with an aqueous media and is wetted. A particle bed of the particles of the present invention, therefore, can be used to guide light. Since the interparticle space and the outer region of the particle have a higher refractive index, light waves are substantially or totally confined to those regions (e.g., the light waves are 99% or more, 95% or more, 90% or more, 85% or more, 80% or more by intensity confined). A particle bed of wetted particles of the present invention thus appears more transparent then a dry bed of regular hydrophobic particles. As a result, the scattering of light from the inner region of the particle of the present invention is minimized and light channels through the aqueous phase. For instance, the scattering of light using the present invention can be reduced by 5%, by 10%, by 20%, by 40%, by 60%, by 75% or more compared to the same amount of light being passed through a bed of conventional aerogel particles. This unique property and other properties described above (such as aggregation or cross-linking), and other advantageous properties (such as low density, high porosity, low thermal conductivity, sound insulation, or moisture resistance), of an aerogel particle that are retained in the particle of the present invention, can be used for products as described above. The aerogel particle of the present invention can be used in rheology, reinforcement, adhesive or toner applications. The aerogel particle can be an additive in any of the materials or formulations used to achieve these applications.

The present invention will be further clarified by the following examples, which are intended to be purely exemplary of the present invention.

### EXAMPLES

### Example 1

Aerogel particles, Cabot's TLD 302, 3 mm-1.2 mm size range were subjected to a UV-ozone treatment for about 7 minutes. This sample was mixed with water in a vial. The particles were wetted by water but floated up to the surface of the water. On closer examination a layer/shell of water was seen around the particles- which was attributed to the hydrophilic shell the water that wets the particles. Furthermore many neighboring particles were held together by capillary forces indicating the wetting by the aqueous fluid. However, these particles still floated on water and were substantially filled with air indicating a substantially hydrophobic core.

### Example 2

Aerogel particles, Cabot's TLD 101, 1.2 mm to 0.7 mm in size range were subjected to UV-ozone treatment. The treatment was performed for said time, after which the particle bed in the tray was shaken to statistically expose the unexposed particle surfaces. 5min+5min in the table below indicates a 5min exposure followed by the mixing of the particle monolayer bed, followed by another 5 min exposure in the UV-ozone chamber.

| | Time of UV Ozone Treatment | Water uptake at 95% RH expressed as mass fraction of dry particles (2 measurements) |
|---|---|---|
| A | 0 min-control | 1.83, 1.83 |
| B | 5min+5min | 1.94, 2.01 |
| C | 10min+10min | 1.99, 2.12 |
| D | 20min | 2.06, 2.21 |

As can be seen for the mass uptake, a very small amount water was absorbed by the particles. The amount increased with exposure time. When these samples were mixed with water, increasing wetting behavior with exposure time was seen by close examination of the particle water interface.

### Example 3

1 g of Cabot's TLD 302 was added to 10 ml of a pH 13 solution made with NaOH. The mixture was shaken for 15 min on a horizontal shaker. Upon examination, the particles were wetted by the solution, and the solution filled the gaps between the particles which was initially filled by air.

### Example 4 (Comparison)

1 g of Cabot TLD 302 was added to 10 ml of de-ionized water and shaken for 15 min on a horizontal shaker. Upon examination, the particles were separated from the aqueous phase, floating on the aqueous phase and were dry akin to the starting dry TLD 302 granules. Shaking for longer times such as 1 hr produced no change in the behavior.

### Example 5

0.5 g of TLD 302 was added to 10 g of NaOH solution at pH 13. The mixture was hand shaken for 1 min. After which, the particles, appeared wetted and were mixed with the aqueous phase given the equivalent volumes of solution and particles.

### Example 6

A small fraction (about 0.1 g) of the wetted particles from Example 5 were transferred to 10 ml of de-ionized water in a vial and shaken for 30 seconds. The particles upon close examination were wetted with a water layer around them and were floating on the aqueous phase indicating a substantial core that was hydrophobic and hence air filled. They had the tendency to aggregate and stick to the glass walls of the vial due to capillary forces. The pH of the aqueous phase was measured to be pH 11.

### Example 7

The particles from Example 6 were again transferred to 10 ml of de-ionized water in a vial and shaken for 30 seconds. The particles upon close examination were wetted with a water layer around them and were floating on the aqueous phase indicating a substantial core that was hydrophobic and hence air filled. They had the tendency to aggregate and stick to the glass walls of the vial due to capillary forces. The pH of the aqueous phase was measured to be pH 7.

When an amount, concentration, or other value or parameter is given herein as either a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

## Claims

1. A particle comprising an inner region and an outer region, wherein at least a portion of said outer region is hydrophilic and said inner region is hydrophobic, wherein the particle is an aerogel, carbon black, a metal oxide or silica, and
wherein said at least a portion of said outer region that is hydrophilic is selected from at least one of a photocalcined region, a region inverse fluidized in ozonated water or in a water chamber with UV light, or an alkaline solution-treated region, and
wherein said inner region is hydrophobic from contacting a starting particle with a silylating compound selected from silanes, halosilanes, haloalkylsilanes, alkoxysilanes, alkoxyalkylsilanes, alkoxyhalosilanes, cyclic siloxanes, disiloxanes, or disilazanes.

2. The particle of claim 1, wherein said outer region is entirely hydrophilic.

3. The particle of claim 1, wherein said particle has a total volume, and said outer region is from 5% to 50% of the total volume.

4. The particle of claim 1, wherein said outer region has a portion that is hydrophilic and a portion that is hydrophobic.

5. The particle of claim 4, wherein from 5% to 80% of the outer region is hydrophilic.

6. The particle of claim 1, wherein said outer region has less hydrophobic organic groups than said inner region.

7. The particle of claim 1, wherein at least a portion of said outer region has silanol groups on its surface.

8. The particle of claim 1, wherein said particle is wettable in aqueous solutions.

9. The particle of claim 7, wherein said silanol groups are reactive or cross-linkable.

10. The particle of claim 1, further comprising one or more silane treating agents on the outer region that is hydrophilic.

11. A monolith comprising a plurality of particles according to claim 1.

12. The particle of claim 1, wherein said particle is fumed silica.

13. A method of making the particle of claim 1, comprising subjecting a particle selected from an aerogel, carbon black, a metal oxide and silica having hydrophobic organic groups on a surface of said particle to photocalcination to remove at least a portion of said hydrophobic organic groups on said surface.

14. A method of making the particle of claim 1, comprising subjecting a particle selected from an aerogel, carbon black, a metal oxide and silica having hydrophobic organic groups on a surface of said particle to inverse fluidization in (1) ozonated water or (2) in a water chamber with UV light.

15. An optical waveguide comprising a bed of particles of claim 1, and an aqueous media, wherein light is guided by the bed of said particles.

16. A method to guide light comprising providing a bed of particles of claim 1 in an aqueous media, and directing light through the bed of particles.

17. A method of making the particle of claim 1, comprising subjecting a particle selected from an aerogel, carbon black, a metal oxide and silica having a hydrophobic surface with an alkaline solution and then fracturing the treated particle to form a particle with exposed hydrophobic regions and hydrophilic regions.

18. A method of making the particle of claim 1, comprising subjecting a particle selected from an aerogel, carbon black, a metal oxide and silica having a hydrophobic surface to a first process to convert at least a portion of said outer region to a hydrophilic region;
treating said particle having said hydrophilic region with at least one silane treating agent;
subjecting said particle to a second process to convert a further portion of said outer region to a hydrophilic region;
treating said additional hydrophilic region with at least one silane treating agent that is the same or different from said earlier treating with said silane treating agent.

19. A formulation comprising a plurality of particles of claim 1 in an aqueous solution, wherein said particles have at least one releasable hydrophobic substance present within the particl

## Patentansprüche

1. Teilchen umfassend einen inneren Bereich und einen äußeren Bereich, worin mindestens ein Teil des äußeren Bereichs hydrophil und der innere Bereich hydrophob ist, wobei das Teilchen ein Aerogel, Ruß, ein Metalloxid oder Siliciumdioxid ist, und
worin der mindestens eine Teil des äußeren Bereichs, der hydrophil ist, gewählt wird aus mindestens einem aus einem photokalzinierten Bereich, einem in ozonisiertem Wasser oder in einer Wasserkammer mit UV-Licht invers fluidisierten Bereich oder einem mit einer alkalischen Lösung behandelten Bereich, und
worin der innere Bereich hydrophob ist durch in Kontakt bringen eines Ausgangsteilchens mit einer Silylierungsverbindung, gewählt aus Silanen, Halosilanen, Haloalkylsilanen, Alkoxysilanen, Alkoxyalkylsilanen, Alkoxyhalosilanen, zyklischen Siloxanen, Disiloxanen oder Disilazanen.

2. Teilchen nach Anspruch 1, worin der äußere Bereich vollständig hydrophil ist.

3. Teilchen nach Anspruch 1, worin das Teilchen ein Gesamtvolumen aufweist und der äußere Bereich von 5 bis 50 % des Gesamtvolumens ausmacht.

4. Teilchen nach Anspruch 1, worin der äußere Bereich einen Anteil, der hydrophil ist, und einen Anteil der hydrophob ist, aufweist.

5. Teilchen nach Anspruch 4, worin 5 bis 80 % des äußeren Bereichs hydrophil sind.

6. Teilchen nach Anspruch 1, worin der äußere Bereich weniger hydrophobe organische Gruppen als der innere Bereich aufweist.

7. Teilchen nach Anspruch 1, worin mindestens ein Teil des äußeren Bereichs Silanolgruppen auf seiner Oberfläche aufweist.

8. Teilchen nach Anspruch 1, worin das Teilchen in wässrigen Lösungen benetzbar ist.

9. Teilchen nach Anspruch 7, worin die Silanolgruppen reaktiv oder vernetzbar sind.

10. Teilchen nach Anspruch 1, welches außerdem ein oder mehrere Silan-Behandlungsmittel auf dem äußeren Bereich, der hydrophil ist, aufweist.

11. Monolith umfassend eine Vielzahl von Teilchen gemäß Anspruch 1.

12. Teilchen nach Anspruch 1, worin das Teilchen pyrogene Kieselsäure ist.

13. Verfahren zur Herstellung des Teilchens gemäß Anspruch 1, umfassend Photokalzinieren eines Teilchens, gewählt aus einem Aerogol, Ruß, einem Metalloxid und Siliciumdioxid, mit hydrophoben organischen Gruppen auf einer Oberfläche des Teilchens, um mindestens einen Teil der hydrophoben organischen Gruppen auf der Oberfläche zu entfernen.

14. Verfahren zur Herstellung des Teilchens nach Anspruch 1, umfassend das inverse Fluidisieren eines Teilchens, gewählt aus einem Aerogel, Ruß, einem Metalloxid und Siliciumdioxid, mit hydrophoben organischen Gruppen auf einer Oberfläche in (1) ozonisiertem Wasser oder (2) in einer Wasserkammer mit UV-Licht.

15. Optischer Wellenleiter umfassend ein Bett aus Teilchen gemäß Anspruch 1 und ein wässriges Medium, worin Licht durch das Bett der Teilchen gelenkt wird.

16. Verfahren zum Lenken von Licht umfassend das Bereitstellen eines Bettes aus Teilchen gemäß Anspruch 1 in einem wässrigen Medium und Leiten von Licht durch das Teilchenbett.

17. Verfahren zur Herstellung des Teilchens gemäß Anspruch 1, umfassend das Behandeln eines Teilchens, gewählt aus einem Aerogel, Ruß, einem Metalloxid und Siliciumdioxid, mit einer hydrophoben Oberfläche mit einer alkalischen Lösung und dann Brechen des behandelten Teilchens um ein Teilchen mit freigelegten hydrophoben Bereichen und hydrophilen Bereichen zu bilden.

18. Verfahren zur Herstellung des Teilchens gemäß Anspruch 1, umfassend das Behandeln eines Teilchens, gewählt aus einem Aerogel, Ruß, einem Metalloxid und Siliciumdioxid, mit einer hydrophoben Oberfläche in einem ersten Verfahren um mindestens einen Teil des äußeren Bereichs in einen hydrophilen Bereich umzuwandeln;
Behandeln des Teilchens mit dem hydrophilen Bereich mit mindestens einem Silan-Behandlungsmittel;
Behandeln des Teilchens in einem zweiten Verfahren um einen weiteren Teil des äußeren Bereichs in einen hydrophilen Bereich umzuwandeln;
Behandeln des zusätzlichen hydrophilen Bereichs mit mindestens einem Silan-Behandlungsmittel, das gleich oder verschieden ist von der früheren Behandlung mit dem Silan-Behandlungsmittel.

19. Formulierung umfassend eine Vielzahl von Teilchen gemäß Anspruch 1 in einer wässrigen Lösung, worin die Teilchen mindestens eine freisetzbare hydrophobe Substanz in den Teilchen aufweisen.

## Revendications

1. Particule comprenant une zone interne et une zone externe, dans laquelle au moins une partie de ladite zone externe est hydrophile et ladite zone interne est hydrophobe, dans laquelle la particule est un aérogel, du noir de carbone, un oxyde métallique ou de la silice, et
dans laquelle ladite au moins une partie de ladite zone externe qui est hydrophile est choisie parmi au moins une d'une zone photocalcinée, une zone soumise à fluidisation inverse dans de l'eau ozonée ou dans une chambre d'eau avec de la lumière UV, ou une zone traitée par solution alcaline, et
dans laquelle ladite zone interne est hydrophobe depuis la mise en contact d'une particule de départ avec un composé de silylation choisi parmi silanes, halosilanes, haloalkylsilanes, alcoxysilanes, alcoxyalkylsilanes, alcoxyhalosilanes, siloxanes cycliques, disiloxanes ou disilazanes.

2. Particule selon la revendication 1, dans laquelle ladite zone externe est entièrement hydrophile.

3. Particule selon la revendication 1, dans laquelle ladite particule a un volume total, et ladite zone externe fait 5 % à 50 % du volume total.

4. Particule selon la revendication 1, dans laquelle ladite zone externe a une partie qui est hydrophile et une partie qui est hydrophobe.

5. Particule selon la revendication 4, dans laquelle de 5 % à 80 % de la zone externe est hydrophile.

6. Particule selon la revendication 1, dans laquelle ladite zone externe a moins de groupes organiques hydrophobes que ladite zone interne.

7. Particule selon la revendication 1, dans laquelle au moins une partie de ladite zone externe a des groupes silanol sur sa surface.

8. Particule selon la revendication 1, dans laquelle ladite particule est mouillable dans des solutions aqueuses.

9. Particule selon la revendication 7, dans laquelle lesdits groupes silanol sont réactifs ou réticulables.

10. Particule selon la revendication 1, comprenant en outre un ou plusieurs agents de traitement au silane sur la zone externe qui est hydrophile.

11. Monolithe comprenant une pluralité de particules selon la revendication 1.

12. Particule selon la revendication 1, dans laquelle ladite particule est de la silice fumée.

13. Procédé de fabrication de la particule selon la revendication 1, comprenant la soumission d'une particule choisie parmi un aérogel, du noir de carbone, un oxyde métallique et de la silice ayant des groupes organiques hydrophobes sur une surface de ladite particule à une photocalcination pour éliminer au moins une partie desdits groupes organiques hydrophobes sur ladite surface.

14. Procédé de fabrication de la particule de la revendication 1, comprenant la soumission d'une particule choisie parmi un aérogel, du noir de carbone, un oxyde métallique et de la silice ayant des groupes organiques hydrophobes sur une surface de ladite particule à une fluidisation inverse dans (1) de l'eau ozonée ou (2) une chambre d'eau avec de la lumière UV.

15. Guide d'onde optique comprenant un lit de particules selon la revendication 1, et un milieu aqueux, dans lequel de la lumière est guidée par le lit desdites particules.

16. Procédé pour guider de la lumière comprenant la fourniture d'un lit de particules selon la revendication 1 dans un milieu aqueux et l'orientation de la lumière à travers le lit de particules.

17. Procédé de fabrication de la particule selon la revendication 1, comprenant la soumission d'une particule choisie parmi un aérogel, du noir de carbone, un oxyde métallique et de la silice ayant une surface hydrophobe avec une solution alcaline et puis la fracturation de la particule traitée pour former une particule avec des zones hydrophobes et des zones hydrophiles exposées.

18. Procédé de fabrication de la particule selon la revendication 1, comprenant la soumission d'une particule choisie parmi un aérogel, du noir de carbone, un oxyde métallique et de la silice ayant une surface hydrophobe à un premier processus pour convertir au moins une partie de ladite zone externe en une zone hydrophile ;
le traitement de ladite particule ayant ladite zone hydrophile avec au moins un agent de traitement au silane ;
la soumission de ladite particule à un second processus pour convertir une autre partie de ladite zone externe en une zone hydrophile ;
le traitement de ladite zone hydrophile supplémentaire avec au moins un agent de traitement au silane qui est identique ou différent dudit traitement antérieur avec ledit agent de traitement au silane.

19. Formulation comprenant une pluralité de particules selon la revendication 1 dans une solution aqueuse, dans laquelle lesdites particules ont au moins une substance hydrophobe libérable présente à l'intérieur des particules.
